Europäisches Patentamt

European Patent Office

Office européen des brevets

(19)

(11) Veröffentlichungsnummer: **0 295 353 B1**

(12) # EUROPÄISCHE PATENTSCHRIFT

(45) Veröffentlichungstag der Patentschrift: **17.04.91**

(21) Anmeldenummer: **87730113.5**

(22) Anmeldetag: **28.09.87**

(51) Int. Cl.⁵: **F01D 5/14**, F04D 29/38,
B01F 15/00, F03D 1/06,
B64C 11/16

(54) **Rotorblatt.**

(30) Priorität: **13.06.87 SY 10386**

(43) Veröffentlichungstag der Anmeldung:
**21.12.88 Patentblatt 88/51**

(45) Bekanntmachung des Hinweises auf die
Patenterteilung:
**17.04.91 Patentblatt 91/16**

(84) Benannte Vertragsstaaten:
**DE**

(56) Entgegenhaltungen:
| | |
|---|---|
| **BE-A- 401 302** | **DE-A- 2 725 221** |
| **DE-A- 2 729 297** | **DE-A- 2 950 572** |
| **DE-A- 3 331 166** | **DE-C- 577 917** |
| **DE-C- 804 090** | **FR-A- 466 271** |
| **GB-A- 2 155 157** | **US-A- 1 345 055** |
| **US-A- 1 838 453** | **US-A- 1 880 995** |
| **US-A- 2 273 756** | **US-A- 3 646 695** |
| **US-A- 4 036 562** | **US-A- 4 081 221** |

(73) Patentinhaber: **Khammas, Achmed Adolf Wolfgang**
**Lützowstrasse 81**
**W-1000 Berlin 30(DE)**

(72) Erfinder: **Al-Majed, Tahsin**
**c/o Dipl.-Ing. M. Kammas Engineering**
**POB 2361 Damaskus(SY)**

(74) Vertreter: **Scholz, Hartmut, Dipl.-Ing.**
**Bundesallee 74**
**W-1000 Berlin 41 (Friedenau)(DE)**

Rank Xerox (UK) Business Services

## Beschreibung

Die Erfindung betrifft ein Rotorblatt für kraftumsetzende Geräte, wobei das Rotorblatt eine von der Blattwurzel ausgehende, längsverlaufende Spaltung aufweist.

Rotorblätter ermöglichen die Leistungsumsetzung aus strömenden Medien sowie die Kraftübertragung aus gasförmigen oder flüssigen Medien, wobei Auftriebskräfte und/oder Widerstandskräfte genutzt werden. Ihre aero- bzw. hydrodynamische Formung und Profilierung ist relativ aufwendig.

Es ist bekannt, daß Flugzeugtragflächen, welche ebenfalls strömungsindizierte Auftriebskräfte nutzen, während des Landefluges mechanisch derart verändert werden, daß sich Fläche und Anstellwinkel vergrößern und daß sich längs der Flügelvorder- und -rückseite schmale Schlitze öffnen, um der Luft ein Durchströmen der Tragfläche zu ermöglichen. Dies verhindert ein sonst anstellwinkelbedingtes und gefahrbringendes plötzliches Nachlassen des Auftriebs. Das Nachlassen der Auftriebskraft tritt jedoch ebenfalls bei einer zu schnellen Rotation von Propellern auf, ebenso wie bei einer zu hohen Windgeschwindigkeit im Falle von Windkraftanlagen.

Hier will die erfinderische Idee Abhilfe schaffen. Die Erfindung, wie sie in den Ansprüchen gekennzeichnet ist, löst die Aufgabe, ein sehr einfach herzustellendes, materialsparendes und hochstabiles Rotorblatt zu schaffen, bei dem ein auftriebsverstärkender großer Anstellwinkel mit einem Schutz vor Strömungsabriss verbunden ist.

Gelöst wird diese Aufgabe dadurch, daß die Längsspaltung in einer Lochung endet, an den Längskanten schmale, abgewinkelte Streifen und an der Stirnseite der nachlaufenden Blatthälfte im Bereich der Längsspaltung ein schmaler, abgewinkelter Streifen vorgesehen sind. Durch diese Maßnahmen wird ein Rotorblatt geschaffen, bei dem die Abrißkante der vorlaufenden Blattwurzel unterhalb der Anströmkante der nachfolgenden Blattwurzel liegt, eine gegenseitige Beeinträchtigung durch Verwirbelung an der Abrißkante tritt dadurch nicht auf. Vielmehr stehen im Bereich der niedrigeren Winkelgeschwindigkeiten, also im Bereich der Habe, quasi zwei Profile zur Verfügung. Zwischen diesen beiden Profilen entsteht ein Sog, durch den die vorhandene Strömungsenergie doppelt ausnutzt werden kann. Zu höheren Winkelgeschwindigkeiten hin, also in Richtung auf die Blattspitze, vereinigen sich diese zwei Blattwurzel dann zu einem gemeisamen, aerodynamisch günstigen Profil.

Die durch die Erfindungerreichten Vorteile sind weiterhin darin zusehen, daß der sich zum Rotorblattende hin verengende Spalt im Blatt das Medium zwingt, seine Strömungsgeschwindigkeit teilweise zu steigern, ohne daß dabei auf aufwendig herzustellende verwundene Profile oder Mechaniken zurückgegriffen werden muß.

Ein besonderer Vorteil ist die erhöhte Stabilität des Rotorblattes gegenüber allen angreifenden Kräften durch die doppelte Blattwurzel. Hierdurch verringern sich sowohl die dort auftretenden Ermüdungserscheinungen als auch die Vibration erheblich. Bei Luft- und Schiffsschrauben bedeutet das eine Ermöglichung stärkerer Zug- bzw. Schubkräfte, bei Ventilatoren oder Mischern eine quantitative Steigerung des Durchsatzes.

Insgesamt zeichnet sich das Rotorblatt durch eine hohe Lebensdauer aus.

Im folgenden wird die Erfindung anhand von lediglich einen Ausführungsweg darstellenden Zeichnungen näher erläutert. Es zeigt

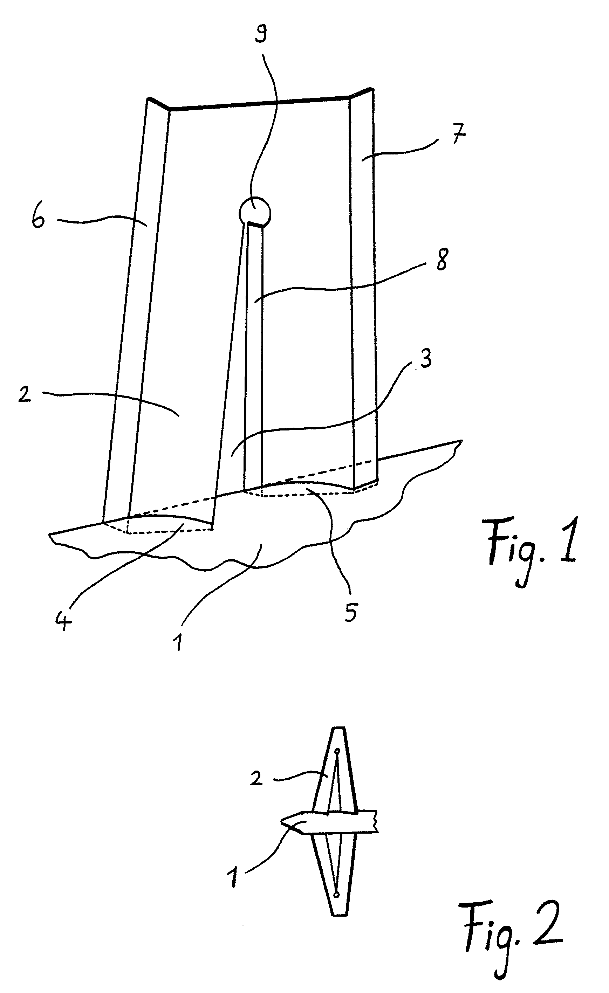

Figur 1 in perspektivischer Darstellung eine erfindungsgemäße Rotorblattkonstruktion und

Figur 2 in verkleinertem Maßstab die Seitenansicht einer Zweiblatt-Konstruktion.

In den Figuren ist ein Rotorblatt für Windkraftanlagen, Ventilatoren, Turbinenlaufräder, Mischer, Luft- und Schiffsschrauben und entsprechende kraftumsetzende Geräte dargestellt, welches in seinem grundsätzlichen Aufbau aus der Achsnabe 1 und dem daran befestigten Rotorblatt 2 besteht. An der Rotornabe 1 können ein Blatt oder mehrere Blätter angebracht sein.

Erfindungegemäß ist das Rotorblatt 2 über drei Viertel seiner Länge gespalten 3 und ausgestellt mit den so entstandenen zwei Blattwurzeln 4, 5 an zwei Stellen längs der Rotornabe 1 hintereinander an dieser befestigt ; dabei ist gemäß einer bevorzugten Ausführungsart der Erfindung der Anstellwinkel Kleiner 45°.

Ein schmaler Streifen ist jeweils an Stirn- und Rückseite 6, 7 des Rotorblattes 2 über die gesamte Blattlänge bis zu einem bestimmten Grad angewinkelt. Ebenso befindet sich ein schmaler angewinkelter Streifen 8 an der Stirnseite der hinteren Blatthälfte.

Am Ende des Spaltes 3 befindet sich eine mit ihm verbundene Lochung 9 , die ein Ausreissen des Spaltes verhindert und eine ausreichende Bedeckung des äußeren Viertels des Rotorblattendes mit dem Strömungsmedium gewährleistet.

## Ansprüche

1. Rotorblatt für kraftumsetzende Geräte, wobei das Rotorblatt eine von der Blattwurzel (1) ausgehende, längsverlaufende Spaltung (3) aufweist, dadurch gekennzeichnet, daß die Längsspaltung (3) in einer Lochung (9) endet, an den Längskanten schmale, abgewinkelte Streifen (6, 7) und an der Stirnseite der nachlaufenden Blatthälfte im Bereich der Längsspaltung (3) ein schmaler, abgewinkelter Streifen (8) vorgesehen sind.

2. Rotorblatt nach Anspruch 1, dadurch gekennzeichnet, daß mehrere Längsspaltungen (3) vorgesehen sind.

3. Rotorblatt nach den Ansprüchen 1 und 2, dadurch gekennzeichnet, daß die Blattspitzen und die abgewinkelten Streifen (6, 7) abgerundet sind.

4. Rotor mit einem Rotorblatt nach den Ansprüchen 1 bis 3, dadurch gekennzeichnet, daß die Blattwurzeln (4, 5) hintereinander in einem gleichen Anstellwinkel mit der Rotornabe (1) verbunden sind.

5. Rotor mit einem Rotorblatt nach Anspruch 4, dadurch gekennzeichnet, daß der Anstellwinkel kleiner 45° ist.

6. Rotor mit einem Rotorblatt nach den Ansprüchen 4 und 5, dadurch gekennzeichnet, daß die Blattwurzeln (3, 4) mit verstellbaren Blattwurzelbefestigungen versehen sind.

## Claims

1. Rotor blade for power-transforming apparatus, wherein the rotor blade comprises a longitudinal cleavage (3) originating from the blade root (1), characterised in that the longitudinal cleavage (3) terminates in an aperture (9), narrow angled bands (6,7) being provided at the longitudinal edges and a narrow angled band (8) being provided on the front face of the trailing blade half in the vicinity of the longitudinal cleavage (3).

2. Rotor blade according to claim 1, characterized in that a plurality of longitudinal cleavages (3) is provided.

3. Rotor blade according to claims 1 and 2, characterized in that the blade tips and the angled bands 6,7 are rounded.

4. Rotor with a rotor blade according to claims 1 to 3, characterized in that the blade roots (4,5) are connected behind one another at the same angle of incidence with respect to the rotor hub (1).

5. Rotor with a rotor blade according to claim 4, characterized in that the angle of incidence is less than 45°.

6. Rotor with a rotor blade according to claims 4 and 5, characterized in that the blade roots (3, 4) are provided with adjustable blade root fastening devices.

## Revendications

1. Pale de rotor pour appareil de conversion mécanique, la paie de rotor présentant une fente (3) longitudinale partant du pied de pale (1), caractérisée en ce que la fente longitudinale (3) s'achève en un perçage (9), que sur les arêtes longitudinales sont prévues des bandes étroites repliées (6, 7) et qu'une bande (8) étroite et repliée est prévue sur le côté frontal de la demi-paie suivante, dans la zone de la fente longitudinale (3).

2. Pale de rotor selon la revendication 1, caractérisée en ce que plusieurs fentes longitudinales (3) sont prévues.

3. Pale de rotor selon les revendications 1 et 2, caractérisée en ce que les pointes des pales et les bandes repliées (6, 7) sont arrondies.

4. Rotor comportant une pale de rotor selon les revendications 1 à 3, caractérisé en ce que les pieds de pale (4, 5) sont reliés, les uns derrière les autres, au moyeu de rotor (1), selon un angle d'attaque identique.

5. Rotor comportant une pale de rotor selon la revendication 4, caractérisé en ce que l'angle d'attaque est inférieur à 45°.

6. Rotor comportant une paie de rotor selon les revendications 4 et 5, caractérisé en ce que les pieds de pale (4, 5) sont pourvus de fixations de pied de pale orientables.

9

7

6

8

2

3

4

1

5

*Fig. 1*

2

1

*Fig. 2*